# EUROPEAN PATENT APPLICATION

(11) **EP 1 591 475 A1**
(43) Date of publication of application: **02.11.2005**
(21) Application number: 04252423.1
(22) Date of filing: 26.04.2004
(51) Int. Cl.: C08K 3/34, C08L 23/08

(54) **Process**

(71) Applicant: Borealis Technology Oy, 06101 Porvoo (FI)
(72) Inventor: The designation of the inventor has not yet been filed
(74) Representative: Campbell, Neil Boyd

(57) **Abstract**

Use of talc as a nucleating agent for linear low density polyethylene, said polyethylene having a density below 940 g/cm³.

## Description

This invention relates to the use of talc as a nucleating agent for relatively low density polyethylene polymers. In particular, the invention relates to the use of minor amounts of talc to nucleate bimodal linear low density polyethylene (LLDPE).

The use of nucleating agents to alter the properties of polyethylenes has been known for many years. In general, upon the addition of a nucleating agent to a polymer two effects are observed. Firstly, the overall rate of crystallisation tends to increase allowing a possible reduction in cycle time during, for example, injection moulding or film blowing. Secondly, the average spherulite size decreases which alters various mechanical and optical properties of the material relative to a non-nucleated analogue. In particular, tensile strength, heat distortion and hardness increase whilst impact strengths tend to decrease. Optical properties such as haze and clarity are also improved in general.

The effectiveness of the nucleation is often measured with reference to changes in crystallisation temperature (Tc) and crystallisation halftime.

Attempts have been made to nucleate many different types of polyethylene polymer. High density polyethylene is considered difficult to nucleate since it has a high crystal growth rate, however, some moderately effectively agents have been identified, e.g. potassium stearate, benzoic acid, sodium benzoate, talc and sodium carbonate. WO01/79344 describes nucleated bimodal HDPE and its use in the formation of moulded articles with increased E-modulus and environmental stress cracking resistance.

Various nucleating agents are known for use with LLDPE, the most common of which is dibenzylidenesorbitol. This nucleating agent and analogues of it are also classified as claifying agents since they induce low haze and high transparency in films of the nucleated polymer.

The skilled person is however, constantly seeking new or alternative nucleating agents for polymers.

The present inventors have surprisingly found that talc is an exceedingly effective nucleating agent for LLDPE even at concentrations well below those conventionally used in nucleation. Conventionally, nucleating agents are added to polymers in loadings of 0.5 to 2% by weight. The present inventors have found that at loadings of less than 0.5% wt, e.g. less than 0.2% wt, preferably around 0.05%wt (500 ppm) effective nucleation can be achieved.

Talc is a known additive in polymers although its primary use is as an antiblocking agent. For example, the background discussion in US 2002/0006486 confirms that finely divided inorganic materials such as talc are added to low and medium density polyethylene to improve antiblocking properties of films.

An anti-blocking agent prevents the polymer sticking to itself, e.g. prevents the sides of a plastic bag sticking thus making the bag difficult to open. Thus the talc can be considered to act as a form of lubricant.

The inventors of this patent go on to suggest the use of talc in high density polyethylene to improve resistance to hydrostatic pressure and consequently improve creep resistance. The resulting polymers are used to make pipes.

Talc has also been suggested as a nucleating agent for high density polyethylene (Plastics Additives Handbook, 5th Ed., Ch 18) but never before has talc been suggested as being suitable for the nucleation of LLDPE. Moreover, it is surprising that effective nucleation is achievable at the very low concentrations of talc exemplified herein.

Thus, viewed from one aspect the invention provides the use of talc as a nucleating agent for linear low density polyethylene, said polyethylene having a density below 940 g/cm³.

Viewed from another aspect the invention provides a process for nucleating LLDPE, said polyethylene having a density below 940 g/cm³, comprising adding talc to said LLDPE.

Viewed from another aspect the invention provides an LLDPE obtained by a process as hereinbefore described.

Talc is a magnesium silicate hydrate, conventionally of general formula 3MgO. 4SiO₂. H₂O. It may contain minor amounts of metal oxides as is known in the art.

The talc can be added to the LLDPE polymer by any convenient means at amounts of less than 3000 parts per million (ppm) relative to the amount of LLDPE present. Preferably the amount added should be the in range of from 50 to 2500 ppm, e.g. 150 to 1000 ppm, most preferably about 500 ppm.

The particle size of the talc employed is also important and can affect the nucleation success. It has been generally observed that smaller particles sizes of talc give rise to improved nucleation effects. Thus, the talc particle size may range from 0.5 to 5 µm, e.g. 1.0 to 4 µm, e.g. around 1.2 µm, 2 µm or 3.8 µm.

The LLDPE to be nucleated should have a density of less than 940 g/cm³, preferably in the range of from 890 to 935 g/cm³, e.g. 910 to 930 g/cm³, preferably 920 to 930 g/cm³ (ISO 1183).

The LLDPE is formed from ethylene along with at least one C₄₋₁₀ alpha-olefin comonomer, e.g. butene, hexene or octene. When the LLDPE is bimodal it may conveniently comprise two comonomers, e.g. butene and hexene.

The MFR₂ (melt flow rate ISO 1133) of the LLDPE should preferably be in the range 0.1 to 5, preferably 0.1 to 1.0, e.g. 0.2 to 0.5 g/10min. The MFR₂₁ (ISO 1133) of the LLDPE should preferably be in the range 10 to 100 g/10min

The LLDPE should preferably be bimodal or multimodal, i.e. its molecular weight profile does not comprise a single peak but instead comprises the combination of two or more peaks (which may or may not be distinguishable) centred about different average molecular weights as a result of the fact that the polymer comprises two or more separately produced components. In this embodiment, a higher molecular weight component preferably corresponds to an ethylene copolymer (or terpolymer) of a higher alpha-olefin comonomer and a lower molecular weight component preferably corresponds to an ethylene homopolymer or an ethylene copolymer (or terpolymer) of a lower alpha-olefin comonomer. Such bimodal polymers may be prepared for example by two or more stage polymerization or by the use of two or more different polymerization catalysts in a one stage polymerization. Preferably however they are produced in a two-stage polymerization using the same catalyst, e.g. a metallocene catalyst or Ziegler-Natta catalyst, in particular a slurry polymerization in a loop reactor followed by a gas phase polymerization in a gas phase reactor.

A loop reactor - gas phase reactor system is marketed by Borealis A/S, Denmark as a BORSTAR reactor system.

Preferably, the low molecular weight polymer fraction is produced in a continuously operating loop reactor where ethylene is polymerized in the presence of a polymerization catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

Where the LLDPE is bimodal, the low molecular weight component preferably has a MFR₂ of 50 to 700 g/10min, preferably 100 to 400 g/10min. The molecular weight of the low molecular weight component should preferably range from 20,000 to 50,000, e.g. 25,000 to 40,000. Preferred molecular weight distribution values for the low molecular weight component range from 3 to 15, e.g. 5 to 12.

The density of the lower molecular weight component may range from 930 to 970 kg/m³, preferably 945 to 970 kg/m³.

The lower molecular weight component should preferably form 40 to 50% by weight of the LLPDE with the higher molecular weight component forming 50 to 60% by weight.

This higher molecular weight component should have a lower MFR and a lower density than the lower molecular weight component.

The LLDPE may be made using conventional single site or Ziegler-Natta catalysis as is known in the art. Conventional cocatalysts, supports/carriers, electron donors etc can be used. Many multimodal or bimodal LLDPE's are commercially available, e.g. FB2230 sold by Borealis A/S.

The use of talc as a nucleating agent has been found to cause significant increases in crystallisation temperature, e.g. an increase of at least 1°C, preferably 1.5°C, especially at least 2°C. Such increases are very significant in terms of crystallisation temperature and allow the formation of polymers having improved heat resistance. Since LLPDE polymers are often used in the manufacture of films, the use of talc as a nucleating agent may allow the production of films with better heat resistance and hence films which are more suitable for autoclave sterilisation.

The increase in crystallisation temperature may also give rise to a better balance between bubble stability, film appearance and draw down.

Even more significantly, large reductions in crystallisation half time are achieved by using talc to nucleate LLDPE polymers. The crystallisation half time is defined as the time it takes for a sample to undergo half of the crystallisation that it would ultimately undergo if left at a given temperature indefinitely. It is common practice to determine crystallisation half times at a variety of temperatures, normally at or around the crystallisation temperature itself.

The use of talc may allow the crystallisation half times measured within 5°C of the actual crystallisation temperature to be reduced by at least half, preferably at least 3 times.

A faster crystallisation half time means that film production rates can be increased. One of the frequently limiting factors in a film production plant is the cooling capacity of the blown film production units. By manufacturing a film which has a much faster crystallisation half time using a talc nucleated LLDPE, much more rapid cooling can be effected and hence production rates increased accordingly.

The higher crystallisation temperature also tends to decrease crystallisation halftime so the combination of these two factors can give rise to important production rate increases.

The nucleated LLDPE may also exhibit higher density. This is achieved however without changing the impact properties of the polymer. Conventionally, an increase in density (i.e. higher stiffness) leads to a reduction in impact strength. The nucleation effect observed using talc can increase density and hence stiffness without detrimentally affecting the impact strength of the polymer.

Furthermore, the inventors have observed that the optical properties of films comprising talc nucleated LLDPE polymers are not detrimentally affected and films exhibit improved barrier properties, e.g. resistance to water and oxygen.

Thus, viewed from a further aspect the invention provides a film comprising an LLDPE having a density of less than 940 g/cm³, said LLDPE having been nucleated with talc.

The talc may be used as a nucleating agent on its own or in combination with other known nucleating agents. In some embodiments it may be convenient to add the talc along with a polymeric carrier such as an LDPE. It is particularly preferred to use talc in combination with a carrier such as LDPE when the LLDPE being nucleated has been made by Ziegler-Natta catalysis. The amount of talc relative to carrier should range from 1:3 to 3:1 preferably about 1:1.

In a highly preferred embodiment of the invention, the talc acts both as a nucleating agent and as an anti-blocking agent.

The nucleated LLDPE can be used in the manufacture of a variety of products, e.g. pipe, cable, mouldings, extrusion coatings, cast films but, as noted above is most importantly used in the manufacture of film. Films made with LLDPE polymers often exhibit high dart impact strength with excellent yield and tensile strength. The films often also show high stiffness and toughness in the cold. The films may have high seal strength and hot tack force.

It has been surprisingly found that when the LLDPE being nucleated with talc is formed by single site catalysis, then the optical properties of films made therewith are significantly improved. In particular, a significant reduction in haze is observed, e.g. the total haze (ASTM D1003) is reduced by at least 25%, preferably at least 50%.

Significant improvements in internal haze and surface haze are also observed e.g. the internal or surface haze (ASTM D1003) is reduced by at least 25%, preferably at least 50%.

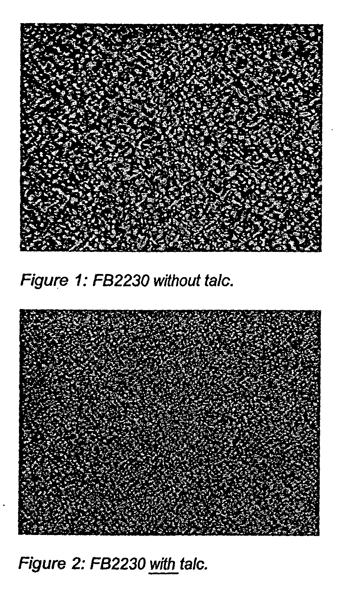

The invention will now be described further with reference to the following non-limiting examples and figures 1 and 2.

Figure 1 is a light micrograph of the polymer grade FB2230 in non-nucleated form. Figure 2 is a light micrograph of the polymer grade FB2230 nucleated with 150 ppm talc.

### Examples

### Film resins:

FB2230 (Ziegler-Natta Commercial grade LLDPE available from Borealis A/S)
Properties: MFR₂ = 0.88, Density = 923 kg/m³

A1768 (95% Single Site LLDPE terpolymer - butene in loop, and hexene in gas phase reactor, 50:50 split & 5% FA5223 (a commercially available LDPE from Borealis A/S) :
LMW fraction of terpolymer: MFR_{2 (LMW)} 100, density (LMW) 935 kg/m³ ;
Polymer composition: MFR₂ = 1.5, MFR₂₁ = 64, FRR_{21/2} = 44, Density = 917.5 kg/m³

### Nucleating agents:

Talc master batch SA431 (50% talc in LDPE carrier)
Average particle size distribution; 2 *µ*m
Amounts: 150, 500 and 1000 ppm (of talc, i.e. 300 ppm etc of batch).

### A20 (talc)

Average particle size; 3.8 *µ*m

Amounts: 150, 500 and 1000 ppm.

### A3 (talc)

Average particle size; 1.2 *µ*m

Amounts: 150, 500, 1000 and 2000 ppm.

All mixtures were compounded on a small-scale 24mm twinscrew Prism extruder with a maximum temperature of 190°C. Resins, based on thermal analysis, were blown into films on a small-scale Ankutec film line.

### Thermal analysis

Crystallisation temperature was measured from standard DSC and crystallization rate from isothermal DSC. Crystallisation half time was measured on a Perkin Elmer DCS7 using an initial melt temperature of 200°C for 5 minutes and cooling at 10°C/min to the test temperature (110°C, 113°C, 114°C and 115°C). Halftime was measured at the peak of the crystallisation curve.

**Table 1**

| Batch (SA431) | FB2230 with talc (150 ppm) | FB2230 no talc |
|---|---|---|
| Density | 923.0 | 922.6 |
| MFR₂ | 0.85 | 0.88 |
| T_{c} | 111.6 | 109.3 |
| t_{1/2} at 113° | 0.13/0.17 | 0.53/0.50 |
| t_{1/2} at 114° | 0.27/0.27 | 0.90/0.83 |

**Table 2.1**

| **Sample name** | **T**_{**c**} **[°C]** | **t**_{**1/2**} **at T=115°C** | **Cryst. rate (1/half time) [min.]** |
|---|---|---|---|
| FB2230 | 109 | 1,1 | 0,015 |
| SA431-150 | 111 | 0,3 | 0,055 |
| SA431-500 | 112 | 0,1 | 0,166 |
| SA431-1000 | 112 | 0,1 | 0,166 |
| A20-150 | 112 | 0,367 | 0,045 |
| A20-500 | 112 | 0,267 | 0,062 |
| A20-1000 | 113 | 0,233 | 0,072 |
| A3-150 | 112 | 0,267 | 0,062 |
| A3-500 | 113 | 0,167 | 0,100 |
| A3-1000 | 113 | 0,2 | 0,083 |
| A3-2000 | 113 | 0,167 | 0,100 |

**Table 2.2 A1768**

| **Sample name** | **T**_{**c**} **[°C]** | **t**_{**1/2**} **at T=110°C** | **Cryst. rate (1/half time) [min.]** |
|---|---|---|---|
| A1768 | 104 | 0,50 | 0,03 |
| SA431-150 | 105 | 0,23 | 0,07 |
| SA431-500 | 106 | 0,10 | 0,17 |
| SA431-2000 | 107 | 0,03 | 0,51 |
| A20-150 | 107 | 0,07 | 0,25 |
| A20-500 | 107 | 0,03 | 0,51 |
| A20-1000 | 107 | 0,03 | 0,51 |
| A20-2000 | 107 | 0,03 | 0,51 |
| A3-150 | 107 | 0,03 | 0,51 |
| A3-500 | 107 | 0,03 | 0,51 |
| A3-1000 | 107 | 0,03 | 0,51 |
| A3-2000 | 107 | 0,03 | 0,51 |

### Optical Properties (ASTM D1003)

With respect to optical properties, values of all nucleated samples of FB2230 were above 80%.

For A1768 significant effects on optical properties were observed.

**Table 2.3:**

| Haze values for A1768 samples | | | |
|---|---|---|---|
| ***Sample*** | ***total haze [%]*** | ***internal haze [%]*** | ***surface haze [%]*** |
| ref. | 43,3 | 6,1 | 37,2 |
| SA431-150 | 11,0 | 4,8 | 6,2 |
| SA431-500 | 27,7 | 5,5 | 22,2 |
| SA431-2000 | 25,3 | 6,1 | 19,2 |
| A20-500 | 25,9 | 5,9 | 20,0 |
| A3-500 | 13,8 | 4,1 | 9,7 |

## Claims

1. Use of talc as a nucleating agent for linear low density polyethylene, said polyethylene having a density below 940 g/cm³.

2. Use as claimed in claim 1 wherein the amount of talc employed is less than 3000 ppm relative to the amount of LLDPE.

3. Use as claimed in claim 2 wherein the amount of talc employed is in the range 150 to 1000 ppm.

4. Use as claimed in any one of claims 1 to 3 wherein the talc has a particle size in the range 0.5 to 5 µm.

5. Use as claimed in any one of claims 1 to 4 wherein the density of the LLDPE is in the range 920 to 930 g/cm³.

6. Use as claimed in any one of claims 1 to 5 wherein said LLDPE is bimodal.

7. Use as claimed in claim 6 wherein said LLDPE comprises butene and hexene.

8. Use as claimed in any one of claims 1 to 7 wherein talc is added to the LLDPE along with an LDPE.

9. A process for nucleating LLDPE, said polyethylene having a density below 940 g/cm³, comprising adding talc to said LLDPE.

10. A process as claimed in claim 9 wherein the amount of talc employed is in the range 150 to 1000 ppm relative to the LLDPE.

11. An LLDPE obtained by a process as claimed in claim 9 or 10.

12. A film comprising an LLDPE having a density of less than 940 g/cm³, said LLDPE having been nucleated with talc.
